# FASCICULE DE BREVET EUROPEEN

(11) **EP 2 524 867 B1**
(45) Date de publication et mention de la délivrance du brevet: **13.07.2016**
(21) Numéro de dépôt: 12168372.6
(22) Date de dépôt: 16.05.2012
(51) Int. Cl.: B64C 25/40, F02C 7/32

(54) **Procédé pour alimenter des moteurs de déplacement autonome d'un aéronef**
Verfahren zum Einspeisen für Motoren mit autonomem Antrieb eines Luftfahrzeug
Method for powering standalone travel motors of an aircraft

(30) Priorité: 20.05.2011 FR 1154444
(43) Date de publication de la demande: 21.11.2012
(73) Titulaire: Messier-Bugatti-Dowty, 78140 Vélizy-Villacoublay (FR)
(72) Inventeur: Garcia, Jean-Pierre, 31170 COLOMIERS (FR); Nierlich, Florent, 92250 LA GARENNE-COLOMBES (FR); Gosselin, Olivier, 75015 PARIS (FR)
(74) Mandataire: Parzy, Benjamin Alain

(56) Documents cités:
- EP-A1- 1 867 567
- WO-A1-95/29094
- WO-A1-2009/086804
- US-A1- 2006 065 779

## Description

L'invention est relative à un procédé pour alimenter des moteurs de déplacement autonome dans les aéronefs, notamment dans des situations de roulage au sol alors que les propulseurs de l'aéronef sont inactifs.

### ARRIERE-PLAN TECHNOLOGIQUE DE L'INVENTION

On envisage de plus en plus d'équiper les aéronefs d'un dispositif de déplacement autonome permettant de déplacer l'aéronef sans l'aide d'un tracteur alors que les propulseurs de l'aéronef ne sont pas en fonctionnement. A cet effet, les roues d'au moins certains des atterrisseurs de l'aéronef sont équipées de moteurs permettant l'entraînement en rotation des roues concernées, et donc le déplacement de l'aéronef. Dans ces phases, les moteurs de déplacement autonome sont alimentées par un générateur entraîné par l'unité de puissance auxiliaire (ou APU en anglais), qui est une machine thermique mise en route alors que les propulseurs de l'aéronef ne sont pas activés (voir par exemple le document US2006/0065779).

Cependant, le générateur de l'APU est dimensionné pour pouvoir assurer l'alimentation du plus consommateur des dispositifs connectés à l'APU, en l'occurrence le dispositif de déplacement autonome. Pour alimenter les autres dispositifs connectés à l'APU (l'électricité de cabine, la climatisation de la cabine, l'avionique...), des convertisseurs doivent être utilisés pour adapter l'alimentation électrique fournie par le générateur à ces dispositifs moins consommateurs

Dans certaines situations, les moteurs du dispositif de déplacement autonome sont susceptibles fonctionner en générateur, par exemple dans des situations où la vitesse de l'aéronef doit être diminuée. L'énergie ainsi générée est alors réinjectée dans le réseau d'alimentation des moteurs. Cette énergie peut alors être stockée dans des batteries ou des capacités ou évacuée par effet Joule dans des résistances. Cependant, ces dispositifs représentent une pénalité en masse importante.

### OBJET DE L'INVENTION

L'invention a pour objet de proposer un procédé pour alimenter des moteurs de déplacement autonome optimisé, ainsi qu'un ensemble APU/génération électrique faisant application.

### BREVE DESCRIPTION DE L'INVENTION

En vue de la réalisation de ce but, on propose un procédé pour alimenter un dispositif de déplacement autonome d'aéronef comportant un certain nombre de moteurs d'entraînement de roues pour entraîner sélectivement lesdites roues au moins lorsque les propulseurs de l'aéronef ne sont pas activés, l'aéronef comportant une unité auxiliaire de puissance ou APU entraînant un premier générateur pour alimenter des dispositifs de l'aéronef devant être alimentés lorsque les propulseurs en sont pas activés. Selon l'invention, le procédé comporte l'utilisation d'un deuxième générateur dédié à l'alimentation du dispositif de déplacement autonome, le deuxième générateur étant disposé en parallèle du premier générateur pour être entraîné par l'APU et, lorsqu'il fonctionne en moteur sous l'action d'une énergie restituée par le dispositif de déplacement autonome, pour aider l'APU à entraîner au moins le premier générateur.

Ainsi, le deuxième générateur peut être dimensionné précisément pour les besoins du dispositif de déplacement, autonome. En outre, plutôt que de stocker l'énergie restituée par le dispositif de déplacement autonome, cette énergie est utilisée pour assister l'APU et ainsi diminuer la consommation en carburant de celle-ci.

Selon un aspect particulier de l'invention, le procédé comporte l'étape de contrôler la vitesse de déplacement au sol de l'aéronef en alimentant les moteurs de déplacement autonome pour faire accélérer l'aéronef jusqu'à une consigne de vitesse donnée si la vitesse de l'aéronef est inférieure à ladite consigne de vitesse, et au contraire faire fonctionner les moteurs en générateur pour ralentir l'aéronef jusqu'à ladite consigne de vitesse si la vitesse de l'aéronef est supérieure à ladite consigne de vitesse, l'énergie restituée par les moteurs étant remontée vers le deuxième générateur. Un tel procédé peut être mis en oeuvre par l'électronique de puissance qui gère l'alimentation des moteurs de déplacement autonome.

L'invention a encore pour objet un ensemble de génération de puissance faisant application comportant .
- une unité de puissance auxiliaire de type thermique ou APU ;
- une boîte de transmission ayant un arbre d'entrée entraîné par l'APU ;
- des premier et deuxième générateurs entraînés par la boîte de transmission ;
la boîte de transmission étant agencée pour, lorsque le deuxième générateur fonctionne en moteur, transmettre une transmission de puissance mécanique du deuxième générateur au moins vers le premier générateur.

### BREVE DESCRIPTION DES FIGURES

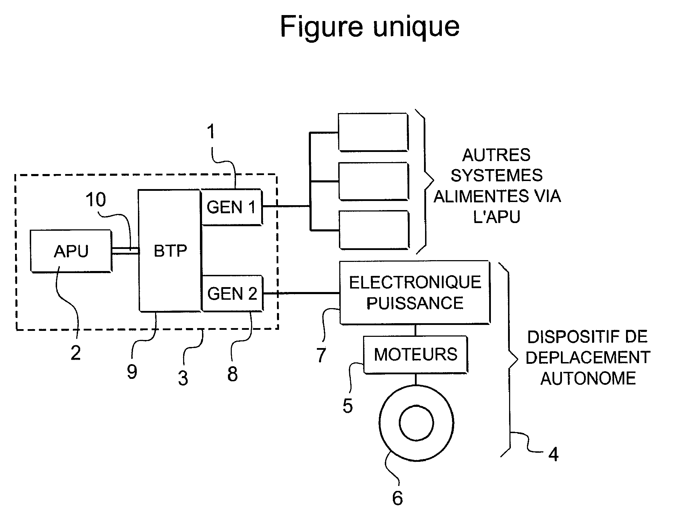

L'invention sera mieux comprise à la lumière de la description qui suit de l'unique figure illustrant, de façon schématique, un mode de mise en oeuvre particulier de l'invention.

### DESCRIPTION DETAILLEE D'UN MODE DE MISE EN OEUVRE DE L'INVENTION

Un aéronef comporte plusieurs dispositifs ou systèmes qui peuvent ou doivent être alimentés alors que les propulseurs de l'aéronef ne son pas actifs. Il peut s'agir par exemple du système de conditionnement d'air, de l'éclairage de la cabine, des feux de position... Il est à noter qu'aucun de ces systèmes n'est susceptible de renvoyer de la puissance électrique, puisqu'ils ne fonctionnent normalement pas en moteur.

Il est connu d'alimenter ces systèmes à l'aide d'un générateur 1 entraîné par une machine thermique tournant à l'aide du carburant embarqué dans l'aéronef, en l'occurrence une unité de puissance auxiliaire ou APU 2. L'ensemble forme une unité de génération de puissance 3 apte à alimenter en puissance électrique les systèmes consommateurs. Il est bien connu que l'APU peut entraîner d'autres accessoires, comme un compresseur d'air, une pompe hydraulique...

L'ajout d'un dispositif de déplacement autonome 4 conduit à installer sur l'aéronef un consommateur supplémentaire susceptible de demander de la puissance électrique alors que les propulseurs de l'aéronef ne sont pas actifs. Ce dispositif de déplacement autonome comporte essentiellement des moteurs 5 disposés pour entraîner en rotation des roues 6 de l'aéronef pour mouvoir celui-ci sur l'aéroport. Les moteurs sont alimentés par une électronique de puissance 7 permettant de doser la puissance électrique fournie aux moteurs en fonction de l'accélération ou de la vitesse souhaitée.

Selon l'invention, l'énergie électrique nécessaire au fonctionnement du dispositif de déplacement autonome 4 est fournie par un deuxième générateur 8 dédié et entraîné également par l'APU 2. Plus précisément, l'APU 2 est couplée à une boîte de transmission principale (BTP) 9 permettant à un arbre de sortie 10 de l'APU 2 d'entraîner simultanément et en parallèle les générateurs 1 et 8. L'unité de génération de puissance 3 comporte ainsi au moins deux générateurs électriques, dont l'un est dédié à l'alimentation du dispositif de déplacement autonome.

Cette disposition présente divers avantages :
- chacun des générateurs peut être dimensionné aux besoins du ou des systèmes consommateurs qui lui sont associés. A titre d'exemple, pour un aéronef du type de l'AIRBUS A320, le premier générateur 1 sera dimensionné pour fournir une puissance de l'ordre de 30 kVA, tandis que le deuxième générateur 8 sera dimensionné pour fournir une puissance de l'ordre de 90 à 140 kVA.
- Lorsque le dispositif de déplacement autonome fonctionne en générateur, par exemple lorsque l'aéronef ralentit alors que les moteurs 5 sont en prise avec les roues 6, l'énergie électrique ainsi produite est remontée via l'électronique de puissance 7 au deuxième générateur 8 qui fonctionne alors en moteur. Celui-ci génère alors une énergie mécanique qui est transmise via la boîte de transmission principale 9 pour entraîner le générateur 1, soulageant d'autant l'APU 2 qui voit ainsi sa consommation de carburant diminuer. Il est à noter que si l'APU entraîne d'autres accessoires, comme un compresseur d'air ou une pompe hydraulique, ceux-ci bénéficieront également de cette remontée de puissance transformée en puissance mécanique par le deuxième générateur 8.
- Les moteurs 5 du dispositif de déplacement autonome peuvent alors être volontairement utilisés pour freiner l'aéronef, économisant ainsi les disques des freins à friction. L'énergie ainsi récupérée est alors utilisée pour soulager l'APU 2. Ainsi, il devient possible de contrôler la vitesse de déplacement au sol de l'aéronef selon le scénario suivant : les moteurs de déplacement autonome sont alimentés pour faire accélérer l'aéronef jusqu'à une consigne de vitesse donnée si la vitesse de l'aéronef est inférieure à ladite consigne de vitesse, et au contraire, les moteurs de déplacement autonome sont utilisés en générateur pour ralentir l'aéronef jusqu'à ladite consigne de vitesse si la vitesse de l'aéronef est supérieure à ladite consigne de vitesse, l'énergie restituée par les moteurs étant récupérée et remontée au deuxième générateur, comme expliqué précédemment. Un tel procédé peut être mis en oeuvre par l'électronique de puissance qui gère l'alimentation des moteurs. La consigne de vitesse peut être générée par un ordinateur de bord chargé de gérer le déplacement de l'aéronef au sol, ou être générée en réponse à l'actionnement par le pilote d'un levier ou autre commande.

L'invention n'est pas limitée à ce qui vient d'être décrit, mais englobe au contraire toute variante entrant dans le cadre défini par les revendications. En particulier, on pourra prévoir des dispositifs d'accouplement/désaccouplement entre les générateurs et la boîte de transmission principale. La boîte de transmission principale pourra également entraîner d'autres accessoires, comme par exemple une pompe.

Par ailleurs, bien que la boîte de transmission principale est traditionnellement du type à pignons, on pourra utiliser tout autre type de transmission, comme par exemple une transmission électromagnétique, du moment que l'énergie mécanique que le deuxième générateur est susceptible de développer lorsqu'il reçoit l'énergie électrique renvoyée par le dispositif de déplacement autonome puisse être transmise et utilisée pour entraîner le premier générateur, en soulageant ainsi l'APU.

## Revendications

1. Procédé pour alimenter dans un aéronef un dispositif de déplacement autonome (4) comportant un certain nombre de moteurs (5) d'entraînement de roues (6) pour entraîner sélectivement lesdites roues au moins lorsque les propulseurs de l'aéronef ne sont pas activés, l'aéronef comportant une unité auxiliaire de puissance ou APU (2) entraînant un premier générateur (1) pour alimenter des dispositifs de l'aéronef devant être alimentés lorsque les propulseurs ne sont pas activés, **caractérisé en ce que** le procédé comporte l'utilisation d'un deuxième générateur (8) dédié à l'alimentation du dispositif de déplacement autonome, le deuxième générateur étant disposé en parallèle du premier générateur pour être entraîné par l'APU et, lorsqu'il fonctionne en moteur sous l'action d'une énergie restituée par le dispositif de déplacement autonome, pour aider l'APU à entraîner au moins le premier générateur.

2. Procédé selon la revendication 1, comportant l'étape de contrôler la vitesse de déplacement au sol de l'aéronef en alimentant les moteurs de déplacement autonome pour faire accélérer l'aéronef jusqu'à une consigne de vitesse si la vitesse de l'aéronef est inférieure à ladite consigne de vitesse, et au contraire faire fonctionner les moteurs en générateur pour ralentir l'aéronef jusqu'à ladite consigne de vitesse si la vitesse de l'aéronef est supérieure à ladite consigne de vitesse, l'énergie restituée par les moteurs étant alors remontée vers le deuxième générateur.

3. Ensemble de génération de puissance comportant :
- une unité de puissance auxiliaire ou APU (2) capable de délivrer une puissance mécanique ;
- une boîte de transmission principale (9) entraîné par un arbre de sortie de l'APU ;
- au moins des premier et deuxième générateurs (1,8) entraînés par la boîte de transmission principale ;
**caractérise en ce que** la boîte de transmission est agencée pour, lorsque le deuxième générateur fonctionne en moteur, transmettre une transmission de puissance mécanique du deuxième générateur vers au moins le premier générateur.

## Patentansprüche

1. Verfahren zum Speisen einer Vorrichtung (4) mit autonomem Antrieb in einem Luftfahrzeug, wobei die Vorrichtung eine bestimmte Anzahl von Motoren (5) zum Antrieb von Rädern (6) umfasst, um die genannten Räder zumindest dann selektiv anzutreiben, wenn die Triebwerke des Luftfahrzeugs nicht aktiviert sind, wobei das Luftfahrzeug ein Hilfstriebwerk oder APU (2) umfasst, das einen ersten Generator (1) antreibt, um Vorrichtungen des Luftfahrzeugs zu speisen, die gespeist werden müssen, wenn die Triebwerke nicht aktiviert sind, **dadurch gekennzeichnet, dass** das Verfahren die Nutzung eines zweiten Generators (8) umfasst, der zur Speisung der Vorrichtung mit autonomen Antrieb vorgesehen ist, wobei der zweite Generator parallel zum ersten Generator angeordnet ist, um von dem APU angetrieben zu werden und, wenn er unter der Einwirkung einer von der Vorrichtung mit autonomem Antrieb abgegebenen Energie als Motor arbeitet, um das APU dabei zu unterstützen, zumindest den ersten Generator anzutreiben.

2. Verfahren nach Anspruch 1, umfassend den Schritt des Steuerns der Bewegungsgeschwindigkeit des Luftfahrzeugs auf dem Boden, indem die Motoren mit autonomem Antrieb gespeist werden, um das Luftfahrzeug bis zu einem Geschwindigkeitssollwert zu beschleunigen, wenn die Geschwindigkeit des Luftfahrzeugs kleiner als der genannte Geschwindigkeitssollwert ist, und im Gegensatz dazu, die Motoren als Generator arbeiten zu lassen, um das Luftfahrzeug bis zu dem genannten Geschwindigkeitssollwert zu verlangsamen, wenn die Geschwindigkeit des Luftfahrzeugs größer als der genannte Geschwindigkeitssollwert ist, wobei die von den Motoren abgegebene Energie dann zu dem zweiten Generator zurückgeführt wird.

3. Leistungserzeugungseinheit, umfassend:
- ein Hilfstriebwerk oder APU (2), das in der Lage ist, eine mechanische Leistung zu liefern,
- ein Hauptgetriebe (9), das von einer Abtriebswelle des APU angetrieben wird,
- mindestens einen ersten und einen zweiten Generator (1, 8), die von dem Hauptgetriebe angetrieben werden,
**dadurch gekennzeichnet, dass** das Getriebe so ausgebildet ist, dass es, wenn der zweite Generator als Motor arbeitet, eine mechanische Leistungsübertragung vom zweiten Generator zumindest zum ersten Generator überträgt.

## Claims

1. Method for powering an autonomous drive device (4) in an aircraft comprising a certain number of drive motors (5) for the wheels (6) for selectively driving the said wheels at least when the jet engines of the aircraft are not activated, the aircraft comprising an auxiliary power unit or APU (2) driving a first generator (1) for supplying power to devices on the aircraft that need to be powered when the jet engines are not activated, **characterized in that** the method comprises the use of a second generator (8) dedicated to the power supply of the autonomous drive device, the second generator being disposed in parallel with the first generator so as to be driven by the APU and, when the second generator operates as a motor under the action of power recovered by the autonomous drive device, so as to help the APU to drive at least the first generator.

2. Method according to Claim 1, comprising the step for controlling the speed of the aircraft over the ground by powering the autonomous drive motors in order to accelerate the aircraft up to a requested speed if the speed of the aircraft is lower than the said requested speed, and conversely, to make the motors operate as generators in order to slow down the aircraft until the said requested speed is reached if the speed of the aircraft is higher than the said requested speed, the power recovered by the motors then being fed back to the second generator.

3. Power generation assembly comprising:
- an auxiliary power unit or APU (2) capable of delivering a mechanical power;
- a main gearbox (9) driven by a drive shaft coming from the APU;
- at least first and second generators (1,8) driven by the main gearbox; **characterized in that**
the main gearbox is configured so that, when the second generator operates as a motor, the main gear box transmits a transmission of mechanical power from the second generator to at least the first generator.
